# DEMANDE DE BREVET EUROPEEN

(11) **EP 3 758 349 A1**
(43) Date de publication de la demande: **30.12.2020**
(21) Numéro de dépôt: 20182304.4
(22) Date de dépôt: 25.06.2020
(51) Int. Cl.: H04M 9/08, H04R 5/02, G10K 11/178

(54) **SYSTÈME AUDIO POUR APPUI-TÊTE AVEC MICROPHONE(S) INTÉGRÉ(S), APPUI-TÊTE ET VÉHICULE ASSOCIÉS**

(30) Priorité: 26.06.2019 FR 1906982
(71) Demandeur: Faurecia Clarion Electronics Europe, 75012 Paris (FR)
(72) Inventeur: LOPEZ ZULETA, Nicolas, 75010 PARIS (FR); RIGAUD-MAAZAOUI, Mounira, 75010 PARIS (FR); NOIROT, Jérôme, 75010 PARIS (FR); DOUKOPOULOS, Xenofon, 75010 PARIS (FR); LAQUEILLE, Gaël, 75010 PARIS (FR); LECLERE, Jérémie, 75010 PARIS (FR)
(74) Mandataire: Lavoix

(57) **Abrégé**

Ce système audio (30) pour appui-tête de siège comprend N haut-parleur(s) (32), chacun configuré pour être intégré dans un appui-tête de siège, N étant un nombre entier supérieur ou égal à 1 ; et un dispositif de traitement audio (36) comportant une chaine électronique d'émission (60) connectée au(x) haut-parleur(s) (32) et configurée pour émettre au moins un flux audio via le(s) haut-parleur(s) (32).

Le système audio (30) comprend en outre P microphone(s) (34), chacun configuré pour être intégré dans l'appui-tête, P étant un nombre entier supérieur ou égal à 1, et en ce que ledit dispositif de traitement audio (36) comporte en outre une chaine électronique de réception (62) connectée au(x) microphone(s) (34) et configurée pour recevoir au moins un signal sonore via le(s) P microphone(s) (34).

## Description

La présente invention concerne un système audio pour appui-tête de siège, le système audio comprenant N haut-parleur(s), chacun configuré pour être intégré dans un appui-tête de siège, N étant un nombre entier supérieur ou égal à 1 ; et un dispositif de traitement audio comportant une chaine électronique d'émission connectée au(x) haut-parleur(s) et configurée pour émettre au moins un flux audio via le(s) haut-parleur(s).

La présente invention concerne également un tel dispositif de traitement audio.

La présente invention concerne également un appui-tête de siège destiné à être couplé à un dossier d'un siège, l'appui-tête étant équipé d'un tel système audio, le(s) haut-parleur(s) et le(s) microphone(s) étant intégrés dans l'appui-tête.

L'invention concerne également un véhicule de transport de passagers, notamment un véhicule automobile, comprenant un ou plusieurs sièges, au moins un siège étant équipé d'un tel appui-tête.

L'invention concerne le domaine des systèmes audio pour véhicules de transport de passagers, en particulier pour véhicules automobiles.

On connaît des documents EP 2 987 341 B1 et EP 3 094 114 B1 un système audio du type précité. Cependant, ce système audio se limite à des applications musicales et l'interaction de l'utilisateur avec un tel système audio n'est pas toujours optimale.

Le but de l'invention est donc de proposer un système audio pour appui-tête de siège permettant d'améliorer l'interaction avec l'utilisateur qui est installé dans le siège équipé dudit appui-tête, ainsi que l'interaction avec un terminal distant utilisé par un interlocuteur qui communique avec l'utilisateur via des moyens de communication téléphonique, en offrant alors à l'utilisateur et à l'interlocuteur une meilleure expérience audio.

A cet effet, l'invention a pour objet un système audio pour appui-tête de siège, le système audio comprenant N haut-parleur(s), chacun configuré pour être intégré dans un appui-tête de siège, N étant un nombre entier supérieur ou égal à 1 ; et un dispositif de traitement audio comportant une chaine électronique d'émission connectée au(x) haut-parleur(s) et configurée pour émettre au moins un flux audio via le(s) haut-parleur(s),

le système audio comprenant P microphone(s), chacun configuré pour être intégré dans l'appui-tête, P étant un nombre entier supérieur ou égal à 1, et ledit dispositif de traitement audio comportant une chaine électronique de réception connectée au(x) microphone(s) et configurée pour recevoir au moins un signal sonore via le(s) P microphone(s).

Avec le système audio selon l'invention, l'interaction avec l'utilisateur est bien meilleure de par le ou les microphones configurés pour être intégrés dans l'appui-tête, lui offrant notamment une possibilité de conversation téléphonique en mode mains libres, et la chaine électronique de réception connectée aux microphones et configurée pour recevoir au moins un signal sonore via les P microphones.

L'expérience audio offerte à l'utilisateur est alors nettement améliorée, notamment lorsqu'il souhaite avoir une conversation téléphonique via le système audio, en mode mains libres, ou encore émettre une instruction vocale via le système audio à destination d'un système de reconnaissance vocale.

En complément facultatif, lorsque la chaine électronique de réception comporte en outre au moins un module de diminution de l'écho relié au(x) microphone(s), cela permet de diminuer l'écho dû au(x) haut-parleur(s) intégré(s) dans l'appui-tête, ainsi qu'à d'éventuel(s) autre(s) haut-parleur(s) à l'intérieur de l'habitacle d'un véhicule de transport de passagers comportant ledit système audio.

Suivant d'autres aspects avantageux de l'invention, le système audio comprend une ou plusieurs des caractéristiques suivantes, prises isolément ou suivant toutes les combinaisons techniquement possibles :
- N et P sont chacun supérieur ou égal à 2 ;
- le système audio comprend deux voies, chaque voie comportant au moins un haut-parleur et au moins un microphone,
   telles qu'une voie droite et respectivement une voie gauche configurées pour être intégrées dans l'appui-tête à droite et respectivement à gauche d'une zone d'appui de la tête d'un utilisateur ;
- la chaine électronique de réception comporte au moins un module de diminution de l'écho relié au(x) microphone(s) et configuré pour diminuer l'écho dû au(x) haut-parleur(s),
   de préférence un module de diminution de l'écho pour chaque microphone, chaque module de diminution de l'écho étant alors relié à un microphone respectif
   le nombre de module(s) de diminution de l'écho étant de préférence encore égal au produit de M et P, où M représente le nombre de flux audio apte(s) à être émis simultanément via le(s) haut-parleur(s) ;
- le ou chaque module de diminution de l'écho est configuré pour diminuer en outre l'écho dû à un ou plusieurs haut-parleur(s) additionnel(s), chaque haut-parleur additionnel étant configuré pour être installé à l'écart de l'appui-tête de siège et à l'intérieur d'un véhicule comportant ledit appui-tête de siège ;
- la chaine électronique de réception comporte un module de réduction du bruit relié au(x) microphone(s) et configuré pour réduire le bruit dans le signal reçu via le(s) microphone(s) ;
- P est supérieur ou égal à 2, la chaine électronique de réception comporte un module de sélection configuré pour sélectionner le meilleur signal parmi les signaux reçus des P microphones,
   le module de sélection étant de préférence configuré pour sélectionner le meilleur signal en fonction d'un rapport signal/bruit pour chacun des signaux reçus des microphones ; et
- la chaine électronique de réception comporte un module d'application du gain relié au(x) microphone(s) et configuré pour régler le gain d'un signal résultant du ou des signaux reçus via le(s) microphone(s).

L'invention a également pour objet un dispositif de traitement audio pour un système audio tel que défini ci-dessus, ledit dispositif de traitement audio comprenant :
- une chaine électronique d'émission connectée au(x) haut-parleur(s) et configurée pour émettre au moins un flux audio via le(s) haut-parleur(s), et
- une chaine électronique de réception connectée au(x) microphone(s) et configurée pour recevoir au moins un signal sonore via le(s) P microphone(s),
   ladite chaine électronique de réception comprenant au moins un module de diminution de l'écho relié au(x) microphone(s) et configuré pour diminuer l'écho dû au(x) haut-parleur(s), le nombre de module(s) de diminution de l'écho étant égal au produit de M et P, où M représente le nombre de flux audio apte(s) à être émis via le(s) haut-parleur(s).

L'invention a également pour objet un appui-tête de siège destiné à être couplé à un dossier d'un siège, l'appui-tête étant équipé d'un système audio tel que défini ci-dessus, le(s) haut-parleur(s) et le(s) microphone(s) étant intégrés dans l'appui-tête.

Suivant d'autres aspects avantageux de l'invention, l'appui-tête de siège comprend une ou plusieurs des caractéristiques suivantes, prises isolément ou suivant toutes les combinaisons techniquement possibles :
- l'appui-tête comprend un corps central et au moins un volet latéral mobile par rapport au corps central, au moins un haut-parleur et au moins un microphone étant intégrés dans un volet latéral respectif, et
- l'appui-tête comprend le corps central et deux volets latéraux disposés de part et d'autre du corps central, chaque volet latéral étant mobile par rapport au corps central, au moins un haut-parleur et au moins un microphone étant de préférence encore intégrés dans chaque volet latéral.

L'invention a également pour objet un véhicule de transport de passagers, notamment véhicule automobile, le véhicule de transport comprenant un ou plusieurs sièges, au moins un siège comportant un appui-tête tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

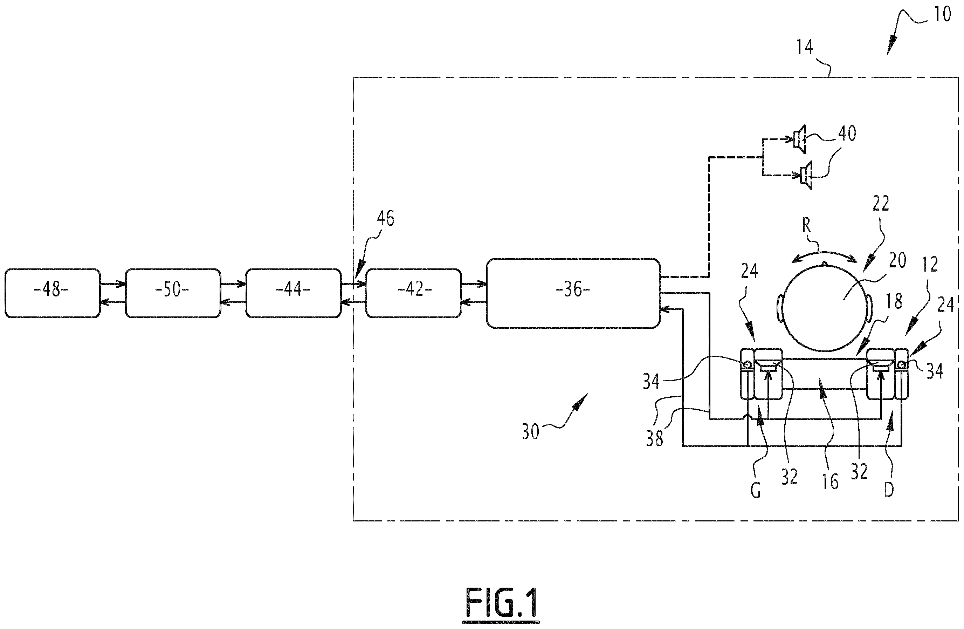

[Fig 1] la figure 1 est une vue schématique d'un véhicule de transport de passagers comprenant au moins un siège avec un appui-tête équipé d'un système audio selon l'invention, le système audio pour appui-tête de siège comprenant un ou plusieurs haut-parleur(s) intégré(s) dans l'appui-tête de siège, une chaîne électronique d'émission de flux audio via le ou lesdits haut-parleur(s), ainsi qu'un ou plusieurs microphone(s) intégré(s) dans l'appui-tête et une chaîne de réception d'au moins un signal sonore via le ou lesdits microphone(s) ; et

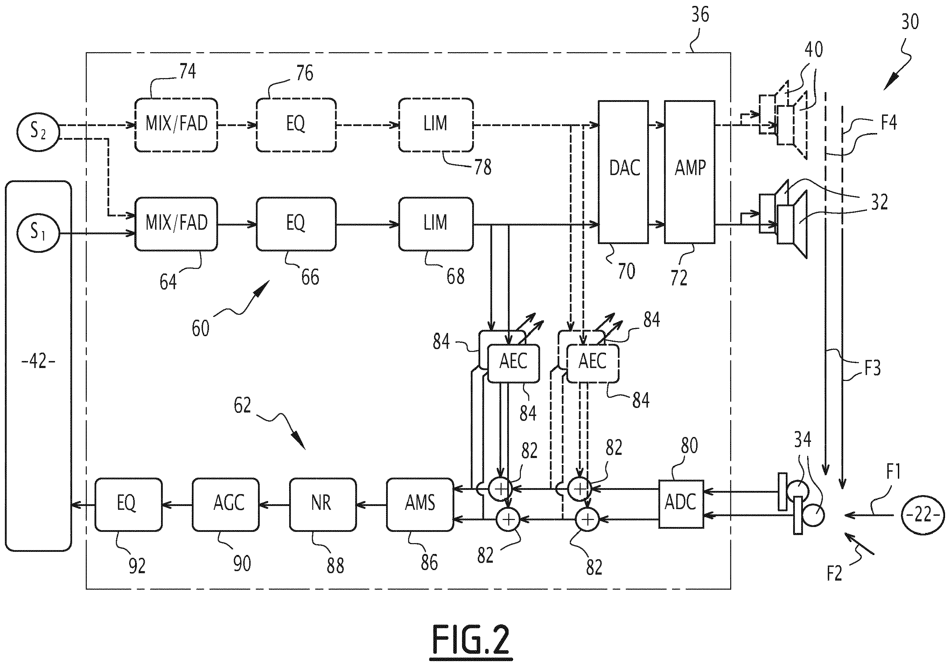

[Fig 2] la figure 2 est une vue schématique du système audio de la figure 1.

Sur la figue 1, un véhicule 10 de transport de passagers comprend un ou plusieurs sièges, non représentés, au moins un siège comportant un appui-tête 12. Le véhicule de transport 10 comporte de préférence plusieurs sièges, répartis selon une ou plusieurs rangées.

Le véhicule de transport 10 est par exemple un véhicule automobile comprenant typiquement plusieurs sièges, répartis de préférence selon une, deux, ou encore trois rangées de sièges. Lorsque le véhicule de transport 10 comporte plusieurs rangées de sièges, la rangée de sièges se trouvant à l'avant du véhicule 10 selon la direction de déplacement dudit véhicule est dite rangée avant, celle se trouvant à l'arrière du véhicule 10 est dite rangée arrière, et la ou les éventuelles rangées de siège se trouvant entre la rangée avant et la rangée arrière sont dites rangées intermédiaires.

Le véhicule de transport 10 comprend un habitacle 14 à l'intérieur duquel sont disposés le ou les sièges, l'habitacle 14 étant schématisé par le rectangle en trait discontinu à la figure 1.

Chaque appui-tête 12 est destiné à être couplé mécaniquement à un dossier, non représenté, d'un siège respectif. Chaque appui-tête 12 comprend un corps central 16, formant typiquement une zone 18 d'appui de la tête 20 d'un utilisateur 22.

En complément facultatif, au moins un appui-tête 12 comprend au moins un volet latéral 24, disposé latéralement par rapport au corps central 16, c'est-à-dire disposé d'un côté du corps central 16 par rapport à une direction d'extension du dossier du siège auquel est couplé ledit appui-tête.

Dans l'exemple de la figure 1, l'appui-tête 12 comprend deux volets latéraux 24 disposés de part et d'autre du corps central 16, à savoir un volet latéral droit et un volet latéral gauche, la droite et la gauche étant définies par rapport à la direction de déplacement dudit véhicule. Chaque volet latéral 24 est de préférence mobile par rapport au corps central 16, et est par exemple mobile en rotation par rapport à un axe sensiblement parallèle à l'axe d'extension du dossier du siège. L'axe d'extension du dossier du siège s'étend généralement sensiblement verticalement. Chaque volet latéral 24 est par exemple articulé par rapport au corps central 16.

En variante, les deux volets latéraux 24 sont fixes par rapport au corps central 16 de l'appui tête 12. Les deux volets latéraux 24 forment, avec le corps central 16 de l'appui-tête 12, un espace concave.

Au moins un appui-tête 12 est selon l'invention équipé d'un système audio 30 pour appui-tête de siège, le système audio 30 comprenant un ou plusieurs haut-parleur(s) 32, ainsi qu'un ou plusieurs microphone(s) 34. Le ou les haut-parleur(s) 32 et le ou les microphone(s) 34 sont alors intégrés dans l'appui-tête 12, c'est-à-dire sont reçus dans un logement de l'appui-tête 12, prévu à cet effet.

Lorsqu'en complément facultatif l'appui-tête 12 comprend au moins un volet latéral 24, au moins un haut-parleur 32 et au moins un microphone 34 sont de préférence intégrés dans un volet latéral 24 respectif.

Lorsqu'en complément facultatif encore l'appui-tête 12 comprend deux volets latéraux 24 disposés de part et d'autre du corps central 16 et que le système audio 30 comprend au moins deux haut-parleur(s) 32 et au moins deux microphones 34, au moins un haut-parleur 32 et au moins un microphone 34 sont de préférence intégrés dans chaque volet latéral 24 respectif.

Dans l'exemple des figures 1 et 2, le système audio 30 comprend N haut-parleur(s) 32, chacun configuré pour être intégré dans un appui-tête 12 respectif de siège, N étant un nombre entier supérieur ou égal à 1, P microphone(s) 34, chacun étant configuré pour être intégré dans l'appui-tête 12, P étant un nombre entier supérieur ou égal à 1, et un dispositif de traitement audio 36 relié au(x) N haut-parleur(s) 32 et au(x) P microphone(s) 34 via des liaisons 38 respectives, de préférence filaires.

En complément facultatif, le système audio 30 comprend un ou plusieurs haut-parleur(s) additionnel(s) 40, configuré(s) pour être disposé(s) à l'intérieur de l'habitacle 14 du véhicule 10 et à l'écart de l'appui-tête 12. Selon ce complément facultatif, le ou les haut-parleurs 32 sont alors également appelés haut-parleurs d'appui-tête, et le ou les haut-parleurs additionnels 40 sont alors également appelés haut-parleurs d'habitacle.

Dans l'exemple de la figure 1, le système audio 30 est illustré dans une application de téléphonie mobile en mode mains libres, et le dispositif de traitement 36 du système audio 30 est par exemple relié à un module de radiocommunication 42, tel qu'un module de radiocommunication à courte distance, par exemple un module de radiocommunication conforme à la norme Bluetooth. Le module de radiocommunications 42 est alors relié à un terminal utilisateur 44 via une liaison radio 46, telle qu'une liaison conforme à la norme Bluetooth, ou via une liaison filaire, telle qu'un câble. Le module de radiocommunications 42 est typiquement disposé à l'intérieur de l'habitacle 14. Le terminal utilisateur 44 est par exemple un téléphone mobile de l'utilisateur 22, et est apte à communiquer avec un équipement électronique distant 48, tel qu'un terminal distant, via un réseau de communication 50. L'équipement électronique distant 48 est par exemple un téléphone mobile d'un interlocuteur en communication avec l'utilisateur 22.

Dans l'exemple de la figure 2, le nombre N de haut-parleurs 32 et le nombre P de microphones 34 sont chacun supérieur ou égal à 2. Le nombre P est de préférence égal à 2, avec un microphone 34 pour chaque volet latéral 24. Le nombre N est par exemple égal à 2, avec un haut-parleur 32 pour chaque volet latéral 24 ; ou à 4, avec deux haut-parleurs 32 pour chaque volet latéral 24 ; ou encore à 3, avec un haut-parleur 32 pour chaque volet latéral 24, ainsi qu'un haut-parleur 32 pour le corps central 16 de l'appui-tête 12.

Dans l'exemple de la figure 1, le système audio 30 comprend en particulier deux voies, telles qu'une voie droite D et respectivement une voie gauche G configurées pour être intégrées dans l'appui-tête 12 à droite et respectivement à gauche de la zone 18 d'appui de la tête 20 de l'utilisateur 22, comme représenté sur la figure 1. Chaque voie D, G comporte au moins un haut-parleur 32 et au moins un microphone 34.

Chaque haut-parleur 32 est de préférence disposé en partie supérieure de l'appui-tête 12 et à proximité d'une position estimée d'une oreille correspondante, ou bien des deux oreilles, de l'utilisateur 22. Chaque haut-parleur 32 est orienté vers la position estimée de l'oreille correspondante.

• Chaque haut-parleur 32 est de préférence éloigné au maximum du microphone 34 correspondant, tout en ayant le haut-parleur 32 et le microphone 34 agencés au sein de l'appui-tête 12.

Chaque microphone 34 est de préférence positionné à une extrémité de l'appui-tête 12, en partie inférieure de l'appui-tête 12, de préférence encore à une extrémité d'un volet 24 respectif, en étant orienté vers une position estimée de la bouche de l'utilisateur 22.

A titre d'exemple, chaque microphone 34 est dirigé selon une direction perpendiculaire à une direction d'émission du haut-parleur 32 le plus proche. Par direction d'émission du haut-parleur 32, on entend la direction principale suivant laquelle le son sera émis par le haut-parleur 32, cette direction correspondant par exemple à la direction de déplacement d'un aimant associé à une membrane du haut-parleur 32.

Cette direction du microphone 34 perpendiculairement à la direction d'émission du haut-parleur 32 correspondant permet de diminuer l'influence de l'écho acoustique provenant de ce haut-parleur 32 et d'augmenter alors le rapport signal/écho.

En variante, chaque microphone 34 est dirigé selon une direction sensiblement parallèle à une direction d'émission du haut-parleur 32 le plus proche.

L'orientation du microphone 34 vers la position estimée de la bouche de l'utilisateur 22 permet d'augmenter l'intensité du signal capté, en particulier celui dû à la parole de l'utilisateur 22 (flèche F1 à la figure 2), notamment dans les aigus.

En complément facultatif, le logement de réception du haut-parleur 32 est isolé du logement de réception du microphone 34 correspondant, ceci afin de limiter un couplage mécanique (au regard d'une transmission solidienne du son) et acoustique (au regard d'une transmission aérienne du son) entre ledit haut-parleur 32 et ledit microphone 34. Par exemple, des cavités distinctes et étanches (au regard d'une transmission aérienne du son) l'une par rapport à l'autre, sont prévues pour ledit haut-parleur 32 et ledit microphone 34.

En complément facultatif encore, et afin de réduire davantage le couplage mécanique entre le haut-parleur 32 et le microphone 34, le haut-parleur 32 et le microphone 34 sont intégrés chacun dans un volet 24 respectif, le volet 24 comportant le haut-parleur 32 étant alors distinct du volet 24 comportant le microphone 34.

En complément facultatif encore, l'appui-tête 12, et de préférence le ou les volets 24, comportent un ou plusieurs matériaux acoustiques disposés entre le logement de réception du haut-parleur 32, d'une part, et le logement de réception du microphone 34, d'autre part. Ce ou ces matériaux acoustiques permettent de minimiser la transmission de vibrations entre le haut-parleur 32 et le microphone 34 dans une bande passante correspondant à la voix, notamment pour des applications de téléphonie mobile et de reconnaissance vocale, par exemple dans la bande passante comprise entre 50 Hz et 8 kHz. Le matériau acoustique est par exemple un élastomère.

Le dispositif de traitement audio 36 comprend une chaîne électronique d'émission 60 connectée au(x) haut-parleur(s) 32, 40 et configurée pour émettre au moins un flux audio via le(s) haut-parleur(s) 32, 40, comme représenté à la figure 2.

Le dispositif de traitement audio 36 comprend également une chaîne électronique de réception 62 connectée au(x) microphone(s) 34 et configurée pour recevoir au moins un signal sonore via le(s) microphone(s) 34.

Le dispositif de traitement audio 36 est par exemple en forme d'une carte électronique comportant uniquement les chaines électroniques d'émission 60 et de réception 62. En variante, le dispositif de traitement audio 36 est intégré à une carte électronique comportant à la fois les chaines électroniques d'émission 60 et de réception 62, et d'autres fonctionnalités, par exemple le module de radiocommunication 42.

La chaîne d'émission 60 est apte à être connectée à une première source S₁, telle que l'équipement électronique distant 48 en communication avec le terminal d'utilisateur 44, le terminal d'utilisateur 44 formant alors une passerelle de communication entre l'équipement électronique distant 48 et le dispositif de traitement audio 36, ou encore un module de reconnaissance vocale non représenté, ainsi qu'en complément facultatif à une deuxième source S₂, telle qu'un dispositif de lecture de musique, typiquement un autoradio, ou encore un dispositif de navigation, ou encore un dispositif d'animation sonore à l'intérieur du véhicule 10.

La chaîne d'émission 60 comprend, depuis la ou les sources S₁, S₂ vers le(s) haut-parleur(s) 32, un premier module de mélange et de réglage 64, également noté MIX/FAD (de l'anglais *Mixer and Fader*), connecté à la première source S₁, un premier module d'égalisation 66, également noté EQ (de l'anglais *Equalizer*)*,* connecté en sortie du premier module de mélange et de réglage 64, un premier module de limitation 68, connecté en sortie du premier module d'égalisation 66, le premier module de limitation 68 étant également noté LIM (de l'anglais *Limiter*).

En complément, la chaîne d'émission 60 comprend un convertisseur numérique-analogique 70, également noté DAC (de l'anglais *Digital to Analog Converter*), connecté en sortie du premier module de limitation 68, et un amplificateur 72, également noté AMP (de l'anglais *Amplifier*), connecté en sortie du convertisseur numérique-analogique 70. L'amplificateur 72 est connecté en entrée du ou des haut-parleur(s) 32, ainsi qu'en complément facultatif du ou des haut-parleur(s) additionnel(s) 40.

Lorsqu'en complément facultatif le système audio 30 comprend un ou plusieurs haut-parleur(s) additionnel(s) 40, la chaîne d'émission 60 comprend un deuxième module de mélange et de réglage 74, également noté MIX/FAD, connecté à la deuxième source S₂, un deuxième module d'égalisation 76, également noté EQ, connecté en sortie du deuxième module de mélange et de réglage 74, un deuxième module de limitation 78, également noté LIM, connecté en sortie du deuxième module d'égalisation 76. Selon ce complément facultatif, le deuxième module de limitation 78 est connecté en entrée du convertisseur numérique-analogique 70.

En variante non représentée, la chaîne d'émission 60 comprend, en lieu et place du convertisseur numérique-analogique 70, deux convertisseurs numérique-analogique distincts, à savoir un premier convertisseur numérique-analogique connecté en sortie du premier module de limitation 68 et un deuxième convertisseur numérique-analogique connecté en sortie du deuxième module de limitation 78.

En variante non représentée, la chaîne d'émission 60 comprend, en lieu et place de l'amplificateur 72, deux amplificateurs distincts, à savoir un premier amplificateur connecté en sortie du convertisseur numérique-analogique 70, ou selon la variante précitée en sortie du premier convertisseur numérique-analogique, et un deuxième amplificateur connecté en sortie du convertisseur numérique-analogique 70, ou selon la variante précitée en sortie du deuxième convertisseur numérique-analogique.

En variante non représentée, la chaîne d'émission 60 comprend les mêmes modules de mélange et de réglage 64, 74, les mêmes modules d'égalisation 66, 76 et les mêmes modules de limitation 68, 78, mais agencés selon un ordre différent depuis la ou les sources S₁, S₂ vers le ou les haut-parleur(s) 32, 40. A titre d'exemple, en variante, le premier module d'égalisation 66 est connecté à la première source S₁, puis le premier module de mélange et de réglage 64 est connecté en sortie du premier module d'égalisation 66, et le premier module de limitation 68 est connecté en sortie du premier module de mélange et de réglage 64, le premier module de limitation 68 étant lui-même connecté en entrée du convertisseur numérique-analogique 70. Selon cette variante, le deuxième module d'égalisation 76 est de manière analogue connecté à la deuxième source S₂, le deuxième module de mélange et de réglage 74 est connecté en sortie du deuxième module d'égalisation 76 et le deuxième module de limitation 78 est connecté en sortie du deuxième module de mélange et de réglage 74, le deuxième module de limitation 78 étant connecté en entrée du convertisseur numérique-analogique 70.

Lorsque la deuxième source S₂ est présente, l'homme du métier comprendra que le premier module de mélange et de réglage 64 est de préférence connecté à la fois à la première source S₁ et à la deuxième source S₂, ceci afin de pourvoir diffuser sur le ou les haut-parleur(s) d'appui-tête 32 des flux audio provenant à la fois de la première source S₁ et de la deuxième source S₂.

Lorsque la première source S₁ est l'équipement électronique distant 48 ou le module de reconnaissance vocale, le dispositif de traitement audio 36 est typiquement connecté au module de radiocommunications 42, comme dans l'exemple de la figure 1. Lorsque la deuxième source S₂ est le dispositif de lecture de musique, ou encore le dispositif de navigation ou le dispositif d'animation sonore, l'homme du métier comprendra bien entendu que le dispositif de traitement audio 36 est alors connecté au dispositif de lecture de musique, au dispositif de navigation ou encore respectivement au dispositif d'animation sonore.

L'homme du métier comprendra en outre que chaque source S₁, S₂, est apte à émettre un ou plusieurs flux audio.

La chaîne de réception 62 comprend, depuis le ou les microphones 34 vers le module ou dispositif connecté au dispositif de traitement audio 36 en sortie de la chaîne de réception 62, tel que par exemple le module de radiocommunication 42, un convertisseur analogique-numérique 80, également noté ADC (de l'anglais *Analog to Digital Converter*), le convertisseur analogique-numérique 80 étant connecté à chaque microphone 34 ; un ou plusieurs additionneurs 82, chacun étant apte à additionner, d'une part, un signal issu du convertisseur analogique-numérique 80 ou d'un additionneur 82 précédent de la chaîne de réception 62, et d'autre part, un signal issu d'un module de diminution de l'écho 84, également noté AEC (de l'anglais *Acoustic Echo Cancellation*).

La chaîne de réception 62 comprend au moins un module de diminution de l'écho 84 pour chaque microphone 34, et de préférence encore un module de diminution de l'écho 84 pour chaque microphone 34 et pour chaque flux audio apte à être émis simultanément via le ou les haut-parleur(s) 32, 40. Le nombre de modules de diminution de l'écho 84 contenus dans la chaîne de réception 62 est alors de préférence égal à M x P, où M représente le nombre de flux audio aptes à être émis simultanément via le ou les haut-parleur(s) 32, 40, et P représente le nombre de microphone(s) 34, comme décrit précédemment. Dans l'exemple de la figure 2, le nombre M de flux audio aptes à être émis simultanément via les haut-parleurs 32, 40 est égal à deux, à savoir un flux audio droit et un flux audio gauche, afin d'avoir une stéréophonie, et le nombre P de microphone(s) 34 est égal à deux, de sorte que le nombre de modules de diminution de l'écho 84 est égal à quatre dans cet exemple.

L'homme du métier comprendra en outre que si un même flux audio est diffusé sur deux haut-parleurs 32, 40 distincts, alors ce flux audio compte pour unique flux audio, y compris si ce flux audio est diffusé avec un délai entre l'un et l'autre des deux haut-parleurs 32, 40, ou encore si un filtrage linéaire est appliqué à ce flux préalablement à sa diffusion sur l'un des deux haut-parleurs 32, 40.

La chaîne de réception 62 comprend également un module de sélection 86, également noté AMS (de l'anglais *Automatic Microphone Selection*), connecté en sortie du ou des additionneurs 82, le module de sélection 86 étant connecté en sortie du ou des dernier(s) additionneur(s) 82 de la chaîne de réception 62 en cas d'une pluralité d'additionneurs 82 connectés successivement les uns à la suite des autres.

La chaîne de réception 62 comprend également un module de réduction du bruit 88, également noté NR (de l'anglais *Noise Reduction*), connecté en sortie du module de sélection 86, un module d'application d'un gain 90, également noté AGC (de l'anglais *Automatic Gain Control*), connecté en sortie du module de réduction du bruit 88, et un troisième module d'égalisation 92, également noté EQ, connecté en sortie du module d'application du gain 90, le troisième module d'égalisation 92 étant alors connecté en entrée du module ou du dispositif qui est connecté au dispositif de traitement audio 36 en sortie de la chaîne de réception 62, tel que le module de radiocommunication 42.

En variante non représentée, la chaîne de réception 62 comprend les mêmes additionneurs 82, module de diminution de l'écho 84, module de sélection 86, module de réduction du bruit 88, module d'application du gain 90 et troisième module d'égalisation 92, mais disposés selon un ordre différent depuis le ou les microphones 34 vers le module ou dispositif connecté au dispositif de traitement audio 36 en sortie de la chaîne de réception 62. A titre d'exemple, le module de réduction du bruit 88 est connecté en sortie du ou des additionneurs 82, la chaîne de réception 62 comportant alors de préférence un module de réduction du bruit 88 pour chaque microphone 34, puis le module de sélection 86 est connecté en sortie de chaque module de réduction du bruit 88, le module d'application du gain 90 étant connecté en sortie du module de sélection 86, et enfin le troisième module d'égalisation 92 étant connecté en sortie du module d'application du gain 90.

Le premier module de mélange et de réglage 64 est configuré pour mélanger les signaux issus de plusieurs sources audio, en cas d'une pluralité de sources audio en entrée du dispositif de traitement audio 36, et/ou pour régler le niveau sonore des différentes sources en fonction de gain associé à chacune des sources.

Le premier module de mélange et de réglage 74 est par exemple configuré pour effectuer une somme pondérée des différentes sources en entrée, en fonction d'un gain de réglage prédéfini pour chaque source. Le premier module de mélange et de réglage 74 comporte, par exemple, un étage de réglage (de l'anglais *fader*) connecté à ces différentes sources et adapté pour pondérer chaque source en fonction du gain de réglage prédéfini respectif, suivi d'un étage de mélange (de l'anglais *mixer*) adapté pour mélanger les différents signaux issus de l'étage de réglage, et typiquement pour additionner les différents signaux issus de l'étage de réglage.

Le premier module de mélange et de réglage 64 est alors typiquement configuré pour mélanger des messages vocaux de téléphonie issus de l'équipement électronique distant 48 ou de reconnaissance vocale avec d'autres sources audio, telles que des sources de musique, de navigation, ou encore des sonneries.

Le premier module de mélange et de réglage 64 est également configuré pour atténuer ou couper le son de chaque source au cas où une ou plusieurs autres sources devraient être diffusées sur le ou les haut-parleur(s) 32. En complément, le premier module de mélange et de réglage 64 permet, en téléphonie et en reconnaissance vocale, d'obtenir tout le flux audio pour le signal de référence qui sera fourni en entrée du ou des module(s) de diminution de l'écho 84, et ainsi annuler tout autre flux audio qui serait diffusé simultanément sur le ou les haut-parleur(s) 32.

Le premier module d'égalisation 66 est connu en soi et permet d'appliquer un filtre en fréquence au signal reçu en entrée afin d'obtenir en sortie un signal modifié avec des niveaux différents selon les fréquences considérées.

Le premier module d'égalisation 66 permet notamment d'améliorer la réponse en fréquence du ou des haut-parleur(s) 32 intégré(s) dans l'appui-tête 12 en utilisant par exemple un ou plusieurs filtres de référence permettant de corriger le timbre de la voix jouée sur les haut-parleurs et de lui donner plus de chaleur, de clarté et de précision. En effet, l'intégration du ou des haut-parleur(s) 32 dans l'appui-tête 12 modifie la réponse en fréquence de chaque haut-parleur 32. A titre d'exemple, la réponse en fréquence de chaque haut-parleur 32 doit de préférence avoir une forme qui n'est pas plate et/ou peut être très limitée en basses fréquences en raison des dimensions réduites de chaque haut-parleur 32.

Le premier module d'égalisation 66 est par exemple configuré pour appliquer un ou plusieurs filtres biquadratiques successifs (de l'anglais *biquad filter*) pour chacun des flux audio apte à être diffusés simultanément sur le ou les haut-parleur(s) 32, par exemple pour les flux audio gauche et droite. Un filtre biquadratique est connu en soi et est un filtre linéaire récursif du second ordre, contenant deux pôles et deux zéros. La fonction de transfert d'un tel filtre biquadratique est un rapport entre deux fonctions quadratiques.

Le premier module de limitation 68 est configuré pour limiter le gain du ou des flux audio, afin d'éviter des distorsions d'écrêtage, en particulier après égalisation et mélange.

Le convertisseur numérique-analogique 70 et l'amplificateur 72 sont connus en soi.

Le deuxième module de mélange et de réglage 74 est similaire au premier module de mélange et de réglage 64, le deuxième module d'égalisation 76 étant similaire au premier module d'égalisation 66, et enfin le deuxième module de limitation 78 étant similaire au premier module de limitation 68.

Chaque additionneur 82 et chaque module de diminution de l'écho 84 associé sont reliés au(x) microphone(s) 34, par exemple via le convertisseur analogique-numérique 80, et configurés pour diminuer l'écho dû au(x) haut-parleur(s) 32, 40, illustré par les flèches F3 et F4 sur la figure 2, c'est-à-dire l'écho dû au(x) haut-parleur(s) d'appui-tête 32 et/ou au(x) haut-parleur(s) d'habitacle 40.

Dans l'exemple de la figure 2, chaque additionneur 82 et chaque module de diminution de l'écho 84 associé sont configurés pour diminuer l'écho pour un microphone 34 respectif et pour un flux audio apte à être émis sur un haut-parleur 32, 40 respectif. Chaque additionneur 82 est alors configuré pour additionner, d'une part, le signal issu du microphone 34 respectif via le convertisseur analogique-numérique 80, et d'autre part, le signal issu du module de diminution de l'écho 84 respectif, le signal issu du module de diminution de l'écho 84 respectif ayant pour but de diminuer, voire d'annuler, l'écho contenu dans le signal issu du microphone 34 et correspondant au flux de haut-parleur auquel le module de diminution de l'écho 84 est associé. Le module de diminution de l'écho 84 est par exemple connecté en sortie du module de limitation 68, 78 respectif correspondant au flux audio auquel il est associé, et également en sortie de l'additionneur 82 auquel il est associé, cette connexion en sortie de l'additionneur 82 formant une boucle de rétroaction.

Le module de diminution de l'écho 84 est par exemple configuré pour effectuer une diminution d'écho via un filtrage adaptatif mettant en œuvre un algorithme de projection affine, noté APA (de l'anglais *Affine Projection Algorithm*)*,* selon les équations suivantes : [math 1] ${ \begin{matrix}e \left(n\right) = y \left(n\right) - {h}^{T} \left(n\right) ⋅ x \left(n\right) \\ h \left(n+1\right) = h \left(n\right) + µ ⋅ X \left(n\right) ⋅ {\left({X}^{T}\left(n\right)⋅X\left(n\right)+Δ\right)}^{- 1} ⋅ e \left(n\right)\end{matrix}$ où le terme *X*(*n*) · (*X^{T}*(*n*)*· X*(*n*) + *Δ*)⁻¹ · *e*(*n*) est calculé en utilisant une descente dichotomique en coordonnées, également notée DCD (de l'anglais *Dichotomous Coordinate Descent)*
*y*(*n*) représente le signal issu du microphone 34, sous forme d'un vecteur de taille *N_{APA}* ^{∗} 1
*x*(*n*) représente le signal diffusé sur le haut-parleur 32, 40, sous forme d'un vecteur de taille *L_{APA}* ^{∗} 1
*e*(*n*) représente le signal issu du module de diminution de l'écho 84, sous forme d'un vecteur de taille *N_{APA}* ^{∗} 1
*h*(*n*) représente un filtre adaptatif modélisant le trajet acoustique entre le haut-parleur 32, 40 et le microphone 34, sous forme d'un vecteur de taille *L_{APA}* * 1
*µ* représente un pas d'adaptation permettant de moduler la vitesse de mise à jour du filtre adaptatif,
*X*(*n*) est une matrice vérifiant : [math 2] $X \left(n\right) = \left[x\left(n\right) x\left(n-1\right) … x\left(n-{N}_{APA}+1\right)\right]$
*Δ* représente un facteur de régularisation de la matrice *X*(*n*)*,* permettant de contrôler son conditionnement et donc la stabilité de la mise à jour du filtre adaptatif,
n représente un indice entier d'itération, et
*X^{T}* est la transposée matricielle de *X.*

Le ou les modules de diminution de l'écho 84 associés aux additionneurs 82 permettent alors de diminuer, voire d'annuler, un éventuel signal provenant du ou des haut-parleur(s) 32, 40, afin de conserver seulement la partie correspondant à la voix de l'utilisateur 22 au sein du signal capté par le ou les microphones 34, ceci typiquement pendant un appel téléphonique ou pendant l'émission d'une consigne vocale.

Lorsque le nombre P de microphones 34 est supérieur ou égal à deux, le module de sélection 86 est configuré pour sélectionner le meilleur signal parmi les signaux reçus des P microphones 34. Le module de sélection 86 est par exemple configuré pour sélectionner le meilleur signal en fonction d'un rapport signal/bruit SNR (de l'anglais *Signal-to-Noise Ratio*) pour chacun des signaux reçus des microphones 34, par exemple de la manière décrite dans le document FR 2 945 696 B1, notamment en page 6, ligne 20 à page 12, ligne 30.

Le module de sélection 86 permet alors de choisir entre les signaux issus des microphones 34, celui qui a le niveau de parole le plus élevé. Ce module de sélection 86 est particulièrement utile lorsque l'utilisateur 22 tourne sa tête 20 sur la droite ou sur la gauche, c'est-à-dire effectue un mouvement de rotation selon la flèche R à la figure 1. En effet, un tel mouvement de la tête 20 de l'utilisateur 22, entraîne une augmentation ou respectivement une diminution de la distance entre la bouche de l'utilisateur 22 et le microphone 34 respectif, ce qui entraîne alors une diminution ou respectivement une augmentation du rapport signal/bruit et du rapport signal/écho correspondant. Autrement dit, le module de sélection 86 permet de conserver le meilleur signal malgré une rotation de la tête de l'utilisateur 22 selon la flèche R, et permet de limiter les effets d'un mouvement de rotation de la tête 20, sur la captation de la voix de l'utilisateur 22.

Le module de réduction du bruit 88 est relié au(x) microphone(s) 34, par exemple via le convertisseur analogique-numérique 80, le ou les additionneurs 82, et le module de sélection 86, et est configuré pour réduire le bruit dans le signal reçu via le ou lesdits microphones 34.

Lors d'un appel téléphonique ou d'une commande de reconnaissance vocale avec émission d'une consigne vocale de la part de l'utilisateur 22, le ou les microphone(s) 34 captent non seulement la voix de l'utilisateur 22 selon la flèche F1, mais aussi un bruit ambiant selon la flèche F2 à la figure 2. Le module de réduction de bruit 88 permet alors de réduire le bruit ambiant dans le signal capté par le ou les microphone(s) 34 lors de cet appel téléphonique ou de cette reconnaissance vocale, et alors d'améliorer la qualité de l'appel ou les performances de reconnaissance vocale. Cette amélioration de la qualité de l'audio est alors perceptible suivant différents critères, notamment une meilleure intelligibilité de l'appel, une moindre gêne audio par exemple grâce à la réduction de bruit, ou encore un caractère plus naturel de la voix (timbre, chaleur, clarté, précision).

Le module d'application du gain 90 est relié au(x) microphone(s) 34, par exemple via le convertisseur analogique-numérique 80, le ou les additionneur(s) 82, le module de sélection 86 et le module de réduction du bruit 88, et est configuré pour appliquer le gain à un signal résultant du ou des signaux reçus via le ou les microphones 34.

La valeur du gain varie dans le temps, selon le niveau de la parole de l'utilisateur 22. Elle est calculée de telle sorte que le niveau de la parole en sortie du module d'application du gain 90 soit constant dans le temps, quelle que soit la voix de l'utilisateur 22, quelle que soit la position ou l'orientation de sa tête 20 dans l'appui-tête 12.

Ce module d'application du gain 90 permet d'avoir en sortie un signal de niveau sensiblement constant, ce qui permet d'améliorer encore la qualité d'un appel téléphonique ou bien les performances de reconnaissance vocale. Ce module d'application du gain 90 est notamment utile en cas de mouvement de la tête 20 de l'utilisateur 22, par exemple en cas de rotation selon la flèche R à la figure 1.

Le troisième module d'égalisation 92 est configuré pour appliquer un filtre en fréquence au signal issu du module d'application du gain 90, afin d'améliorer la réponse en fréquence du signal destiné à être transmis au module ou dispositif en sortie du dispositif de traitement audio 36, tel que le module de radiocommunication 42. Le troisième module d'égalisation 92 permet d'améliorer encore la qualité de la parole transmise à l'interlocuteur de l'utilisateur 22 en cas d'appel téléphonique, ou d'améliorer encore la qualité de la consigne vocale transmise au module de reconnaissance vocale.

En complément facultatif, la chaîne de réception 62 comprend en outre un module de limitation, non représenté, connecté en sortie du troisième module d'égalisation 92.

Ainsi, avec le système audio 30 selon l'invention, l'interaction avec l'utilisateur 22 est bien meilleure de par le ou les microphone(s) 34 configuré(s) pour être intégré(s) dans l'appui-tête 12 et la chaîne de réception 62 connectée au(x) microphone(s) 34 et configurée pour recevoir au moins un signal sonore via les microphones 34. En particulier, la qualité de la voix ou bien la qualité de la consigne vocale est alors bien meilleure avec le ou les microphone(s) 34 intégré(s) à l'appui-tête 12, notamment lorsque l'utilisateur 22 souhaite avoir une conversation téléphonique ou bien émettre une instruction, ou consigne, vocale via le système audio 30.

En complément facultatif, lorsque la chaîne de réception 62 comporte en outre le ou les modules de diminution de l'écho 84, le système audio 30 selon l'invention permet de diminuer, voire d'annuler, l'écho dû au(x) haut-parleur(s) d'appui-tête 32 (flèche F3 à la figure 2) et/ou au(x) haut-parleur(s) d'habitacle 40 (flèche F4 à la figure 2), par exemple lorsque l'utilisateur 22 écoute de la musique en même temps qu'il est en conversation téléphonique. Ainsi, avec le système audio 30 selon l'invention, les autres passagers du véhicule 10 peuvent continuer à écouter de la musique pendant que l'utilisateur 22 passe un appel téléphonique. De plus, l'interlocuteur qui est en conversation téléphonique avec l'utilisateur 22 n'entendra pas, ou très peu, la musique diffusée à l'intérieur du véhicule 10, de par le ou les modules de diminution de l'écho 84. De manière analogue, le ou les modules de diminution de l'écho 84 permettent d'améliorer significativement les performances de reconnaissance vocale dans le cas où l'utilisateur 22 émet une consigne vocale alors qu'une musique est diffusée simultanément sur le ou les haut-parleur(s) 32, 40. En outre, comme la voix de l'interlocuteur parvient à l'utilisateur 22 via les haut-parleurs 32 de l'appui-tête 12, plutôt que via les haut-parleurs additionnels 40, l'utilisateur 22 entendra mieux et plus distinctement l'interlocuteur distant.

En complément facultatif encore, le module de réduction du bruit 88 permet de réduire le bruit (flèche F2 à la figure 2) capté par le ou les microphone(s) 34.

En complément facultatif encore, le module de sélection 86 et/le module d'application du gain 90 permet de limiter, voire de compenser totalement, l'impact d'un mouvement de la tête 20, tel qu'une rotation selon la flèche R, sur le signal sonore capté par le ou les microphone(s) 34.

On conçoit ainsi que le système audio 30 selon l'invention permet d'améliorer l'interaction avec l'utilisateur 22, ainsi qu'avec l'équipement électronique distant 48 utilisé par l'interlocuteur, en leur offrant une meilleure expérience audio.

## Revendications

1. Système audio (30) pour appui-tête (12) de siège, le système audio (30) comprenant N haut-parleur(s) (32), chacun configuré pour être intégré dans un appui-tête (12) de siège, N étant un nombre entier supérieur ou égal à 1 ; et un dispositif de traitement audio (36) comportant une chaine électronique d'émission (60) connectée au(x) haut-parleur(s) (32) et configurée pour émettre au moins un flux audio via le(s) haut-parleur(s) (32),
**caractérisé en ce que** le système audio (30) comprend en outre P microphone(s) (34), chacun configuré pour être intégré dans l'appui-tête (12), P étant un nombre entier supérieur ou égal à 1, et **en ce que** ledit dispositif de traitement audio (36) comporte en outre une chaine électronique de réception (62) connectée au(x) microphone(s) (34) et configurée pour recevoir au moins un signal sonore via le(s) P microphone(s) (34).

2. Système audio (30) selon la revendication 1, dans lequel N et P sont chacun supérieur ou égal à 2.

3. Système audio (30) selon la revendication 1 ou 2, dans lequel le système audio (30) comprend deux voies (D, G), chaque voie (D, G) comportant au moins un haut-parleur (32) et au moins un microphone (34),
telles qu'une voie droite (D) et respectivement une voie gauche (G) configurées pour être intégrées dans l'appui-tête (12) à droite et respectivement à gauche d'une zone (18) d'appui de la tête (20) d'un utilisateur (22).

4. Système audio (30) selon l'une quelconque des revendications précédentes, dans lequel la chaine électronique de réception (62) comporte au moins un module de diminution de l'écho (84) relié au(x) microphone(s) (34) et configuré pour diminuer l'écho dû au(x) haut-parleur(s) (32),
de préférence un module de diminution de l'écho (84) pour chaque microphone (34), chaque module de diminution de l'écho (84) étant alors relié à un microphone respectif (34),
le nombre de module(s) de diminution de l'écho (84) étant de préférence encore égal au produit de M et P, où M représente le nombre de flux audio apte(s) à être émis simultanément via le(s) haut-parleur(s) (32).

5. Système audio (30) selon la revendication 4, dans lequel le ou chaque module de diminution de l'écho (84) est configuré pour diminuer en outre l'écho dû à un ou plusieurs haut-parleur(s) additionnel(s) (40), chaque haut-parleur additionnel (40) étant configuré pour être installé à l'écart de l'appui-tête (12) de siège et à l'intérieur d'un véhicule (10) comportant ledit appui-tête (12) de siège.

6. Système audio (30) selon l'une quelconque des revendications précédentes, dans lequel la chaine électronique de réception (62) comporte un module de réduction du bruit (88) relié au(x) microphone(s) (34) et configuré pour réduire le bruit dans le signal reçu via le(s) microphone(s) (34).

7. Système audio (30) selon l'une quelconque des revendications précédentes, dans lequel P est supérieur ou égal à 2, la chaine électronique de réception (62) comporte un module de sélection (86) configuré pour sélectionner le meilleur signal parmi les signaux reçus des P microphones (34),
le module de sélection (86) étant de préférence configuré pour sélectionner le meilleur signal en fonction d'un rapport signal/bruit (SNR) pour chacun des signaux reçus des microphones (34).

8. Système audio (30) selon l'une quelconque des revendications précédentes, dans lequel la chaine électronique de réception (62) comporte un module d'application du gain (90) relié au(x) microphone(s) (34) et configuré pour régler le gain d'un signal résultant du ou des signaux reçus via le(s) microphone(s) (34).

9. Dispositif de traitement audio (36) pour un système audio (30) selon l'une quelconque des revendications 1 à 8, ledit dispositif de traitement audio (36) comprenant :
- une chaine électronique d'émission (60) connectée au(x) haut-parleur(s) (32) et configurée pour émettre au moins un flux audio via le(s) haut-parleur(s) (32), et
- une chaine électronique de réception (62) connectée au(x) microphone(s) (34) et configurée pour recevoir au moins un signal sonore via le(s) P microphone(s) (34),
**caractérisé en ce que** ladite chaine électronique de réception (62) comprend au moins un module de diminution de l'écho (84) relié au(x) microphone(s) (34) et configuré pour diminuer l'écho dû au(x) haut-parleur(s) (32), le nombre de module(s) de diminution de l'écho (84) étant égal au produit de M et P, où M représente le nombre de flux audio apte(s) à être émis via le(s) haut-parleur(s) (32).

10. Appui-tête (12) de siège destiné à être couplé à un dossier d'un siège, **caractérisé en ce que** l'appui-tête (12) est équipé d'un système audio (30) selon l'une quelconque des revendications 1 à 8, le(s) haut-parleur(s) (32) et le(s) microphone(s) (34) étant intégrés dans l'appui-tête (12).

11. Appui-tête (12) selon la revendication 10, dans lequel l'appui-tête (12) comprend un corps central (16) et au moins un volet latéral (24) mobile par rapport au corps central (16), au moins un haut-parleur (32) et au moins un microphone (34) étant intégrés dans un volet latéral (24) respectif,
l'appui-tête (12) comprenant de préférence le corps central (16) et deux volets latéraux (24) disposés de part et d'autre du corps central (16), chaque volet latéral (24) étant mobile par rapport au corps central (16), au moins un haut-parleur (32) et au moins un microphone (34) étant de préférence encore intégrés dans chaque volet latéral (24).

12. Véhicule (10) de transport de passagers, notamment véhicule automobile, le véhicule de transport (10) comprenant un ou plusieurs sièges,
**caractérisé en ce qu'**au moins un siège comporte un appui-tête (12) selon l'une quelconque des revendications 10 à 11.
